# EUROPEAN PATENT APPLICATION

(11) **EP 3 693 218 A1**
(43) Date of publication of application: **12.08.2020**
(21) Application number: 20166765.6
(22) Date of filing: 04.09.2012
(51) Int. Cl.: B60Q 1/14, F21S 41/663

(54) **VEHICLE HEADLAMP APPARATUS AND SYSTEM VEHICLE HEADLAMP SYSTEM**

(30) Priority: 06.09.2011 JP 2011193872
(62) Divisional of application: 12182912.1
(71) Applicant: KOITO MANUFACTURING CO., LTD., Minato-ku Tokyo 108-8711 (JP)
(72) Inventor: Masuda, Takeshi, Shizuoka, 424-8764 (JP); Murakami, Kentarou, Shizuoka, 424-8764 (JP)
(74) Representative: Hoffmann Eitle

(57) **Abstract**

A light distribution pattern (PA) formed by irradiation of light from a plurality of light sources (52) for a headlamp (22) provided in a vehicle (10) includes a plurality of regions (PA1 to PA5), each of which are irradiated by two or more corresponding light sources (52) of the plurality of light sources (52). An irradiation region (PA1-PA5) is controlled so that at least one of the plurality of regions corresponds to an object moving the light distribution pattern (PA). The two or more light sources corresponding to the irradiation region are turned on with a time difference.

## Description

### BACKGROUND

### 1. Technical Field

The invention relates to a vehicle headlamp and a system for controlling the same.

### 2. Related Art

There is known a vehicle headlamp in which a plurality of light emitting diodes (LEDs) forming an array are used as light sources. A light distribution pattern formed by light emitted from the light sources is divided into plural subregions, and at least one of the plural light sources is assigned to each subregion. Each light source is controlled to be independently turned on/off, so that at least one of the plural subregions forming the light distribution pattern can be selectively set to an irradiation state or a non-irradiation state.

When a vehicle (a vehicle ahead or a oncoming vehicle) is in a certain subregion in the light distribution pattern, the light source corresponding to the certain subregion is turned off, and the subregion is set to the non-irradiation state, thereby suppressing glare for a driver of such a vehicle (see e.g., JP 2009-218155 A (corresponding to EP 2 101 107 A2)). Also, when a pedestrian is in a certain subregion in the light distribution pattern, the light source corresponding to the certain subregion is turned on or is flashed, and the subregion is set to the irradiation state, thereby enabling the pedestrian to recognize the presence of the vehicle in question (see, e.g., JP 2009-184642 A)

### SUMMARY

A relative position between the preceding vehicle or the pedestrian and the vehicle in question is changed from moment to moment due to traveling, and the preceding vehicle or the pedestrian moves in the light distribution pattern. As a result, it is necessary to correspondingly move the non-irradiation region or the irradiation region. For example, a light source corresponding to a first subregion which is in the non-irradiation state so far is turned on, and almost simultaneously, a light source corresponding to a second subregion which is in the irradiation state so far is turned off, so that it is recognized that the region of the non-irradiation state seems to move from the first subregion to the second subregion. However, if the light sources are turned on/off as described above, it seems to the driver that the non-irradiation region moves in the light distribution pattern in small motions or discontinuously, so that there is a case that the driver feels a trouble. This phenomenon similarly occurs in the case where the irradiation region moves.

The invention has made to solve at least a portion of the above problem. The object of the invention is to provide a technology which can solve a trouble felt by a driver when a dimming control is performed in which a subregion that is selectively set to an irradiation state or a non-irradiation state in a light distribution pattern moves.

In order to solve at least a portion of the above problem, the invention can employ various aspects enumerated below.

According to a first aspect of the invention, a vehicle headlamp includes a plurality of light sources (52R1 to 52R5, 52L1 to 52L5) and control means (20). The plurality of light sources (52R1 to 52R5, 52L1 to 52L5) for a headlamp are provided in a vehicle (10). The control means (20) controls irradiation of light from the plurality of light sources (52R1 to 52R5, 52L1 to 52L5) to form a light distribution pattern (PA). The control means (20) executes such control that a predetermined irradiation region (PA2) is moved in the light distribution pattern (PA). The control means (20) causes two or more of the light sources (52R1 to 52R5, 52L1 to 52L5), which are turned on with a first time difference, to irradiate the irradiation region after the movement (PA3).

With this configuration, an illumination intensity of the illumination region after the movement, that is, an illumination intensity of the subregion, which is changed from the non-irradiation state to the irradiation state, in the light distribution pattern increases while having at least one intermediate value. Therefore, it seems to a driver that the irradiation region moves smoothly.

The control means (20) may turn off two or more of the light sources (52R1 to 52R5, 52L1 to 52L5), which irradiate the irradiation region before the movement (PA2), with a second time difference.

With this configuration, an illumination intensity of the illumination region before the movement, that is, an illumination intensity of the subregion, which is changed from the irradiation state to the non-irradiation state, in the light distribution pattern decreases while having at least one intermediate value. Therefore, it seems to the driver that the irradiation region moves more smoothly.

From the viewpoint of suppressing the glare for an object to be irradiated as soon as possible, the second time difference may be shorter than the first time difference.

The plurality of light sources (52R1 to 52R5, 52L1 to 52L5) may include a first light source group (52R1 to 52R5) and a second light source group (52L1 to 52L5). The first light source group (52R1 to 52R5) is provided in a right headlamp (22R) which is disposed on a right side of the vehicle (10). The second light source group (52L1 to 52L5) is provided in a left headlamp (22L) which is disposed on a left side of the vehicle (10). The two or more of the light sources (52R1 to 52R5, 52L1 to 52L5) irradiating the irradiation region after the movement may include at least one of the light sources (52R1 to 52R5) of the first light source group (52R1 to 52R5) and at least one of the light sources (52L1 to 52L5) of the second light source group (52L1 to 52L5).

The plurality of light sources (52R1 to 52R5, 52L1 to 52L5) may be light sources for a high beam.

According to a second aspect of the invention, a control system for a vehicle headlamp includes a plurality of light sources (52R1 to 52R5, 52L1 to 52L5), detection means (14, 18) and control means (14, 20). The light sources (52R1 to 52R5, 52L1 to 52L5) are provided in a vehicle (10). A light distribution pattern (PA) formed by irradiation of light from the plurality of light sources (52R1 to 52R5, 52L1 to 52L5) includes a plurality of subregions (PA1 to PA5) each of which two or more corresponding light sources of the plurality of light sources (52R1 to 52R5, 52L1 to 52L5) can irradiate. The detection means (14, 18) detects an object ahead of the vehicle (10). The control means (14, 20) turns on the two or more light sources corresponding to at least one of the plurality of subregions (PA1 to PA5) in accordance with the detected object, with a first time difference.

With this configuration, an illumination intensity of the subregion, which is changed from the non-irradiation state to the irradiation state, in the light distribution pattern increases while having at least one intermediate value. Therefore, it seems to a driver that the irradiation region moves smoothly while following the object.

The control means (14, 20) may turn off the two or more light sources corresponding to at least another one of the plurality of subregions (PA1 to PA5) in accordance with the detected object, with a second time difference.

With this configuration, an illumination intensity of the subregion, which is changed from the irradiation state to the non-irradiation state, in the light distribution pattern decreases while having at least one intermediate value. Therefore, it seems to the driver that the irradiation region moves more smoothly.

From the viewpoint of suppressing the glare for an object to be irradiated as soon as possible, the second time difference may be shorter than the first time difference.

According to the invention, it is possible to solve the trouble felt by the driver when a dimming control is performed in which a subregion that is selectively set to the irradiation state or the non-irradiation state in the light distribution pattern moves.

### BRIEF DESCRIPTION OF THE DRAWINGS

Fig. 1 is a schematic diagram showing the entire configuration of a vehicle equipped with a headlamp control system according to one exemplary embodiment of the invention.
Fig. 2 is a horizontal section view showing the configuration of a right headlamp unit of Fig. 1.
Figs. 3A and 3B are horizontal section views showing the configuration of a second right lamp unit and a second left lamp unit shown in Fig. 2.
Figs. 4A and 4B are perspective views showing the configuration of a right light emitting unit and a left light emitting unit shown in Figs. 3A and 3B.
Figs. 5A and 5B are schematic diagrams showing a light distribution pattern formed by light emitted from the headlamp shown in Fig. 1.
Figs. 6A to 6C are diagram showing dimmer control executed by the headlamp control system shown in Fig. 1.
Figs. 7A to 7C are diagrams showing a modified example of the dimmer control shown in Figs. 6A to 6C.
Figs. 8A and 8B are diagrams showing an electronic swivel control executed by the headlamp control system shown in Fig. 1.

### DETAILED DESCRIPTION OF EMBODIMENT(S) OF THE INVENTION

Hereinafter, exemplary embodiments of the invention will be explained with reference to the accompanying drawings. In each drawing used in the following description, the scale of each element is modified appropriately in order to make it recognizable.

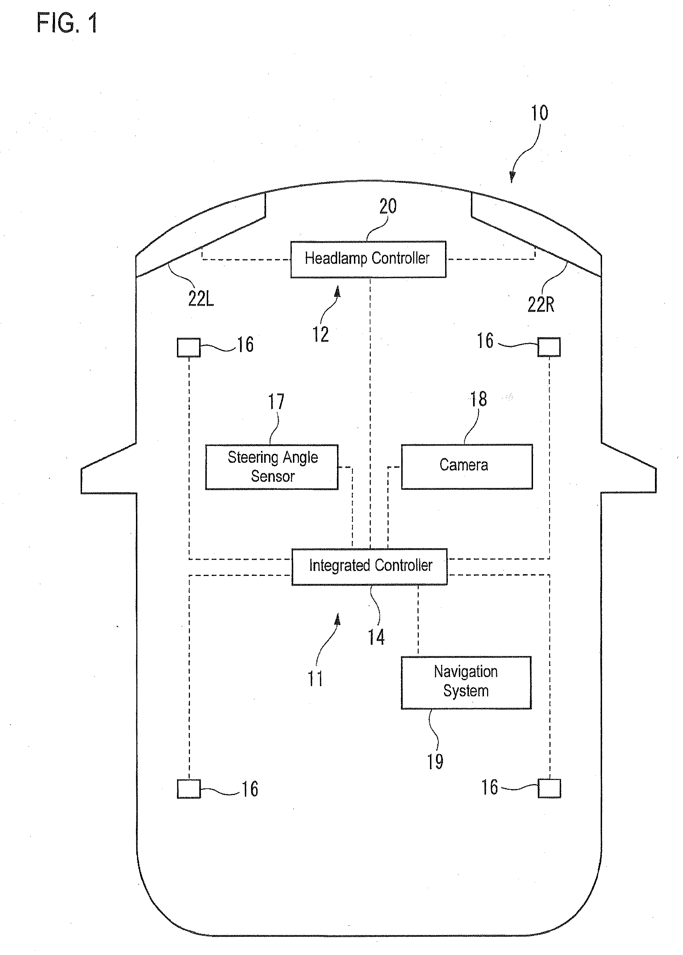

Fig. 1 is a schematic diagram illustrating the whole configuration of a vehicle 10 on which a headlamp control system 11 according to one embodiment of the invention is mounted. The headlamp control system 11 includes a headlamp apparatus 12, an integrated controller 14, wheel speed sensors 16, a steering angle sensor 17, a camera 18, and a navigation system 19.

The integrated controller 14 includes a central processing unit (CPU) for executing various arithmetic processes, a read only memory (ROM) storing various control programs, and a random access memory (RAM) which is used to store data and also used as a working area for executing programs. The integrated controller 14 executes various control operations in the vehicle 10. The integrated controller 14 functions as at least a part of control means of the invention.

The wheel speed sensors 16 are respectively provided to four wheels, that is, a left front wheel, a rear wheel, a right front wheel and a rear wheel which are mounted to the vehicle 10. Each wheel speed sensor 16 is connected to the integrated controller 14 so as to be able to communicate with the integrated controller 14, and outputs a signal corresponding to a rotational speed of the wheel to the integrated controller 14. The integrated controller 14 calculates a speed of the vehicle 10 using the signals input from the wheel speed sensors 16.

The steering angle sensor 17 is provided to a steering wheel, and is connected to the integrated controller 14 so as to be able to communicate with the integrated controller 14. The steering angle sensor 17 outputs a steering angle pulse signal corresponding to a steering rotation angle of the steering wheel rotated by a driver to the integrated controller 14. The integrated controller 14 calculates a traveling direction of the vehicle 10 using the signal input from the steering angle sensor 17.

The camera 18 includes an imaging device such as a charge coupled device (CCD) sensor or a complementary metal oxide semiconductor (CMOS) sensor. The camera 18 captures an image ahead of the vehicle to generate image data. The camera 18 is connected to the integrated controller 14 so as to be able to communicate with the integrated controller 14. The generated image data is output to the integrated controller 14.

The navigation system 19 is connected to the integrated controller 14 so as to be able to communicate with the integrated controller 14, and outputs information indicating a location where the vehicle 10 is running or the like to the integrated controller 14.

The headlamp apparatus 12 includes a headlamp controller 20, a right headlamp unit 22R, and a left headlamp unit 22L. Both the right headlamp unit 22R and the left headlamp unit 22L may be collectively referred to as "headlamp unit 22" hereinafter as a general term where appropriate. The headlamp controller 20 includes a CPU, a ROM, and a RAM, and controls light to be emitted from the headlamp unit 22. The headlamp controller 20 functions as at least a portion of the control means of the invention.

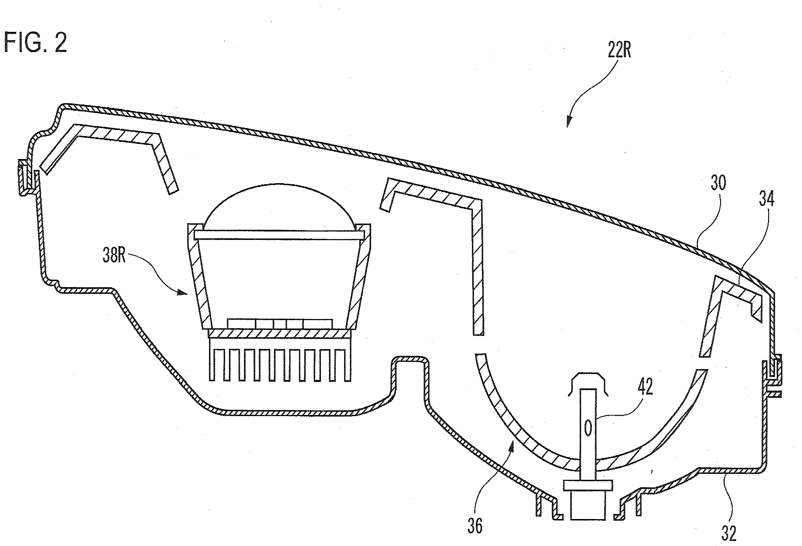

Fig. 2 is a section view of the right headlamp unit 22R, taken along a horizontal plane and viewed from above. The right headlamp unit 22R includes a transparent cover 30, a lamp body 32, an extension 34, a first lamp unit 36, and a second right lamp unit 38R.

The transparent cover 30 is formed of a resin having transparency. The transparent cover 30 is mounted on the lamp body 32 to define a lamp chamber. The first lamp unit 36 and the second right lamp unit 38R are disposed in the lamp chamber.

The extension 34 has opening portions through which light emitted from the first lamp unit 36 and light emitted from the second right lamp unit 38R pass. The extension 34 is fixed to the lamp body 32. The first lamp unit 36 is disposed on the outer side of the vehicle than the second right lamp unit 38R.

The first lamp unit 36 is a so-called projection-type lamp unit to form a low beam light distribution pattern which will be described later. The first lamp unit 36 uses an incandescent lamp, e.g., a halogen lamp, having a filament, or a high intensity discharge (HID) lamp such as a metal halide lamp, as a light source 42. The configuration of the first lamp unit 36 is well known in the art, and its detailed description will be omitted herein.

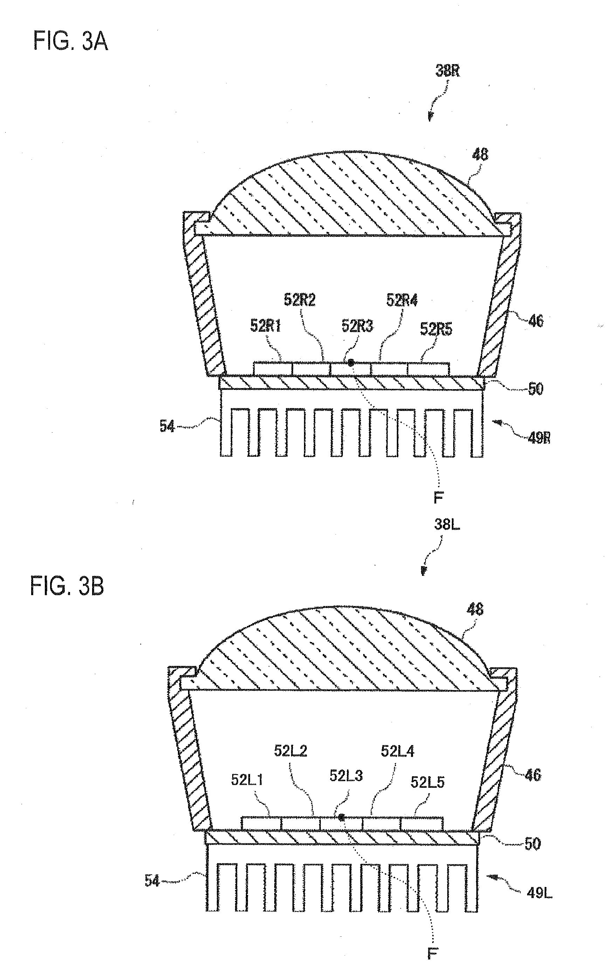

Fig. 3A is a section view of the second right lamp unit 38R, taken along a horizontal plane and viewed from above. The second right lamp unit 38R includes a holder 46, a projection lens 48, and a right light emitting unit 49R.

The projection lens 48 is mounted on one opening portion of the holder 46 formed in a cylindrical shape. The projection lens 48 is a plano-convex aspheric lens having a convex front surface and a flat rear surface. The projection lens 48 projects an inverted image of a light source image formed on a back focal plane of the aspheric lens onto a virtual vertical screen ahead of the lamp.

The right light emitting unit 49R includes a substrate 50, a first right light emitting device 52R1 to a fifth right light emitting device 52R5, and a heat sink 54.

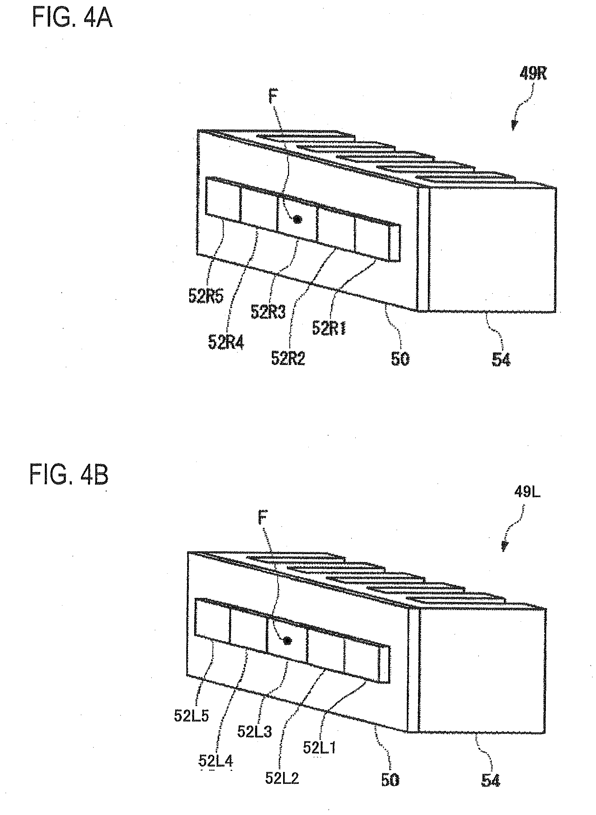

Fig. 4A illustrates the configuration of the right light emitting unit 49R. The first right light emitting device 52R1 to the fifth right light emitting device 52R5 are formed in rectangular parallelepiped shapes having the same height and the same width. Although not shown, each of the first right light emitting device 52R1 to the fifth right light emitting device 52R2 has a light source and a thin film. The light source is a white light emitting diode (LED) having a square light emitting face of about 1 mm by 1 mm. The thin film is provided to cover the light emitting face.

The first right light emitting device 52R1 to the fifth right light emitting device 52R5 are arranged on the front surface of the substrate 50 in order of the first right light emitting device 52R1 to the fifth right light emitting device 52R5 from the left side of the vehicle to the right side of the vehicle to form an LED array. A rear focal point F of the projection lens 48 is located at a surface center position of the third right light emitting device 52R3.

The heat sink 54 is formed in a shape having a number of fins made of a metal such as aluminum. The heat sink 54 is mounted on the rear surface of the substrate 50.

As illustrated in Fig. 3A, the substrate 50 is mounted on the other opening portion of the holder 46 so that the first right light emitting device 52R1 to the fifth right light emitting device 52R5 are disposed in the holder 46. When the respective right light emitting devices from the first right light emitting device 52R1 to the fifth right light emitting device 52R5 emits light, respective images are projected onto the virtual vertical screen ahead of the lamp. The first right light emitting device 52R1 to the fifth right light emitting device 52R5 function as a first light source group of the invention.

The left headlamp unit 22L is configured so that the left headlamp unit 22L and the right headlamp unit 22L are in a bilateral symmetric relation. Thus, the detailed description thereof will be omitted. As shown in Fig. 3B, a second left lamp unit 38L provided in the left headlamp unit 22L has the same configuration as that of the second right lamp unit 38R. Also, as illustrated in Fig. 4B, a left light emitting unit 49L provided in the second left lamp unit 38L has the same configuration as that of the right light emitting unit 49R.

A first left light emitting device 52L1 to a fifth left light emitting device 52L5 are arranged on the front surface of the substrate 50 in order of the first left light emitting device 52L1 to the fifth left light emitting device 52L5 from the left side of the vehicle to the right side of the vehicle to form an LED array (it is noted that the second left lamp unit 38L and the second right lamp unit 38R are not in a bilateral symmetric relation). The first left light emitting device 52L1 to the fifth left light emitting device 52L5 function as a second light source group of the invention.

Turning on/off of the first right light emitting device 52R1 to the fifth right light emitting device 52R5 and the first left light emitting device 52L1 to the fifth left light emitting device 52L5 is respectively controlled by the headlamp controller 20 that supplies or interrupts a current to the respective light emitting elements.

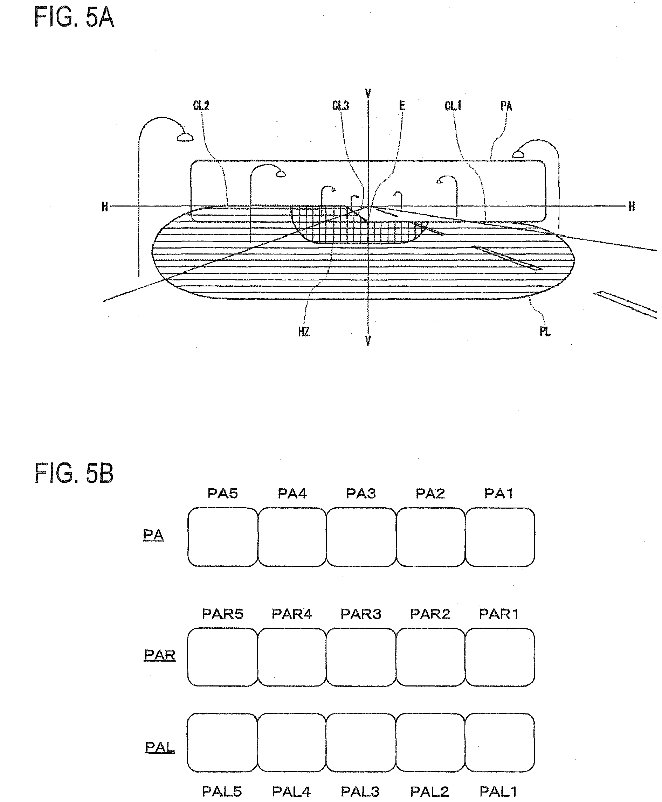

Fig. 5A is a diagram illustrating a light distribution pattern to be formed on a virtual vertical screen located, for example, at a position 25 meters ahead of the vehicle 10 by forwardly emitting light from the right headlamp unit 22R and the left headlamp unit 22L.

A low beam light distribution pattern PL is formed by the first lamp units 36. The low beam light distribution pattern PL is a low beam light distribution pattern of a left light distribution. An upper edge of the low beam light distribution pattern PL has a first cutoff line CL1, a second cutoff line CL2, and a third cutoff line CL3. The first cutoff line CL1 to the third cutoff line CL3 extend along the horizontal direction and create a step across the line V-V. The line V-V is a vertical line which passes through the vanishing point H-V in the forward direction from the headlamp.

The first cutoff line CL1 is used as a cutoff line for an oncoming lane. The third cutoff line CL3 obliquely extends from a left end portion of the first cutoff line CL1 toward an upper left direction. The second cutoff line CL2 extends on the line H-H on the left side from a cross point between the line H-H and the third cutoff line CL3. As a result, the second cutoff line CL2 is used as a cutoff line for the vehicle lane.

In the low beam light distribution pattern PL, a hot zone HZ which is a high luminous intensity area is formed such as to surround an elbow point E being a cross point between the first cutoff line CL1 and the line V-V with slightly shifted to the left direction.

An additional light distribution pattern PA is formed by light emitted from the second right lamp unit 38R and light emitted from the second left lamp unit 38L. As a result, the additional light distribution pattern PA is formed by combining a right additional light distribution pattern PAR formed by the second right lamp unit 38R with a left additional light distribution pattern PAL formed by the second left lamp unit 38L.

The additional light distribution pattern PA includes the horizontal line (the line H-H), and is formed in a band shape which extends along the horizontal direction so that a lower end of the additional light distribution pattern PA is located on the first cutoff line CL1. As a result, the right lamp unit 38R and the second left lamp unit 38L may function as a light source for high beam.

Fig. 5B shows a relationship among the additional light distribution pattern PA, the right additional light distribution pattern PAR, and the left additional light distribution pattern PAL. In this embodiment, the additional light distribution pattern PA is divided into five subregions PA1 to PA5. Similarly, the right additional light distribution pattern PAR is divided into five right subregions PAR1 to PAR 5, and the left additional light distribution pattern PAL is divided into five left subregions PAL1 to PAL5.

The subregion PA1 is formed by combining the right subregion PAR1 and the left subregion PAL1. The subregion PA2 is formed by combining the right subregion PAR2 and the left subregion PAL2. Similarly, the subregion PA3 is formed by combining the right subregion PAR3 and the left subregion PAL3, the subregion PA4 is formed by combining the right subregion PAR4 and the left subregion PAL4, and the subregion PA5 is formed by combining the right subregion PAR5 and the left subregion PAL5.

The first right subregion PAR1 to the fifth right subregion PAR5 are projection images which are respectively formed by using the first right light emitting device 52R1 to the fifth right light emitting device 52R5 as light source images. The first left subregion PAL1 to the fifth left subregion PAL5 are projection images which are respectively formed by using the first left light emitting device 52L1 to the fifth left light emitting device 52L5 as light source images.

That is, each of the subregions PA1 to PA5 is irradiated by corresponding one of the first right light emitting device 52R1 to the fifth right light emitting device 52R5, which constitute the first light source group, and corresponding one of the first left light emitting device 52L1 to the fifth left light emitting device 52L5, which constitute the second light source group, that is, irradiated by two light sources in total.

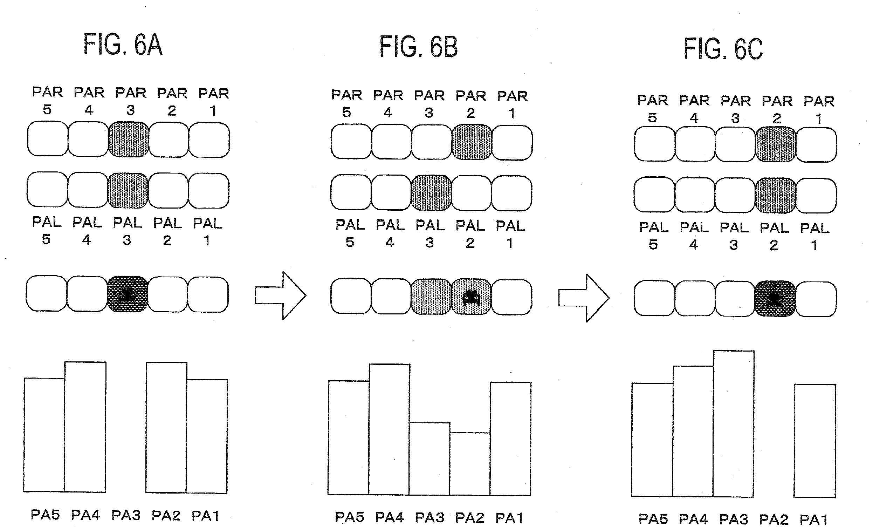

The dimming control by the headlamp control system 11 including the above-described configuration will be described with reference to Fig. 6.

When the additional light distribution pattern PA is formed, that is, when the second right lamp unit 38R and the second left lamp unit 38L emit light, the integrated controller 14 analyzes image data input from the camera 18 to determine as to whether or not there is a vehicle traveling ahead of the vehicle in question (an oncoming vehicle or a vehicle traveling in the same direction in front of the vehicle in question; which may be hereinafter collectively referred to as a "preceding vehicle"). If there is a preceding vehicle, the integrated controller 14 outputs to the headlamp controller 20 position data indicative of a position of the preceding vehicle, which is obtained by analyzing the image data.

In addition to the image data input from the camera 18 or instead of the image data, the presence of the preceding vehicle may be specified by use of obstacle data or the like acquired by a front sensor such as laser sensor (not shown).

The headlamp controller 20 specifies a subregion in the additional light distribution pattern PA including the position of the preceding vehicle indicated by the position data, and turns off the light emitting device 52 corresponding to the specified subregion. In the example shown in Fig. 6A, since the preceding vehicle is in the subregion PA3, the third right light emitting device 52R3 corresponding to the right subregion PAR3 and the third left light emitting device 52L3 corresponding to the left subregion PAL3 are turned off. It is noted that the subregion PA3 is obtained by combining the right and left subregions PAR3 and PAL3.

As a result, the subregion PA3 in which the preceding vehicle is present becomes a non-irradiation region to suppress glare for a driver of the preceding vehicle. Bar graphs, which are shown below the drawing indicating the subregions PA1 to PA5, indicate illumination intensities in the respective subregions PA1 to PA5.

The integrated controller 14 may be configured to execute the process of specifying the subregions, including the preceding vehicle, in the additional light distribution pattern PA, and output to the headlamp controller 20 a command indicative of turning on/off of the respective light emitting devices corresponding to a specifying result. In this instance, the headlamp controller 20 controls the supply/interruption of the current flowing into each light emitting device, based on the command.

If a relative position between the vehicle in question and the preceding vehicle is varied in response to travel of the vehicle, the preceding vehicle moves in the additional light distribution pattern PA. In order to continue the effect of suppressing the glare, it is necessary to move the non-irradiation region in the additional light distribution pattern PA while following the preceding vehicle traveling ahead of the vehicle in question. This movement can be regarded as an operation of replacing the original non-irradiation region with the irradiation region. This can also be rephrased as "a predetermined irradiation region is moved in the additional light distribution pattern PA".

Fig. 6B shows a case where the position of the preceding vehicle moves from the subregion PA3 to the subregion PA2. In this instance, the subregion PA3 which is originally the non-irradiation region is set to the irradiation region, and the subregion PA2 to which the preceding vehicle moves is changed from the irradiation region to the non-irradiation region. If the third right light emitting device 52R3 and the third left light emitting device 52L3, which correspond to the subregion PA3, are simultaneously turned off and if the second right light emitting device 52R2 and the second left light emitting device 52L2, which correspond to the subregion PA2, are simultaneously turned on, it seems to a driver that the non-irradiation region moves discontinuously. Also, if the non-irradiation region is moved to another subregion, it seems to the driver that the non-irradiation region moves in small motions in the additional light distribution pattern PA, so that the driver feels a trouble.

In this embodiment, two light sources corresponding to the irradiation region after movement are turned on with a time difference. In the example shown in Fig. 6B, of the right subregion PAR3 and the left subregion PAL3 corresponding to the subregion PA3, which is changed from the non-irradiation region to the irradiation region, the third right light emitting device 52R3 corresponding to the right subregion PAR3 is first turned on.

Also, two light sources corresponding to the non-irradiation region after movement are turned off with a time difference. In the example shown in Fig. 6B, of the right subregion PAR2 and the left subregion PAL2 corresponding to the subregion PA2, which is changed from the irradiation region to the non-irradiation region, the second right light emitting device 52R2 corresponding to the right subregion PAR2 is first turned off.

As a result, an illumination intensity of each of the subregions PA2 and PA3 is half as much as that of the case where the left and right light emitting devices in each of the subregions PA2 and PA3 are turned on.

As shown in Fig. 6C, the third left light emitting device 52L3 corresponding to the left subregion PAL3 is turned on, and the second left light emitting device 52L2 corresponding to the left subregion PAL2 is turned off. As a result, the subregion PA3 completely becomes the irradiation region, while the subregion PA2 completely becomes the non-irradiation region.

Comparing Figs. 6A and 6C, it can be seen that the non-irradiation region moves from the subregion PA3 to the subregion PA2 (the irradiation region moves from the subregion PA2 to the subregion PA3). In this embodiment, an illumination intensity of each subregion associated with the movement transitions via the state shown in Fig. 6B, that is, a state where the illumination intensity has an intermediate value between the non-irradiation state and the irradiation state. Accordingly, it seems to the driver that the non-irradiation region or the irradiation region moves smoothly in the light distribution pattern PA, thereby solving the trouble.

Considering the purpose of suppressing the glare, it is preferable to move the subregion from the irradiation region to the non-irradiation region as soon as possible. Therefore, it is preferable that a time difference (a second time difference of the invention) at a time in turning off the light emitting devices is shorter than a time difference (a first time difference of the invention) in turning on the light emitting devices. That is, in the example shown in Figs. 6A to 6C, it is preferable that a time difference from a time when the second right light emitting device 52R2 is turned off to a time when the second left light emitting device 52L2 is turned off is shorter than a time difference from a time when the third right light emitting device 52R3 to a time when the third left light emitting device 52L3.

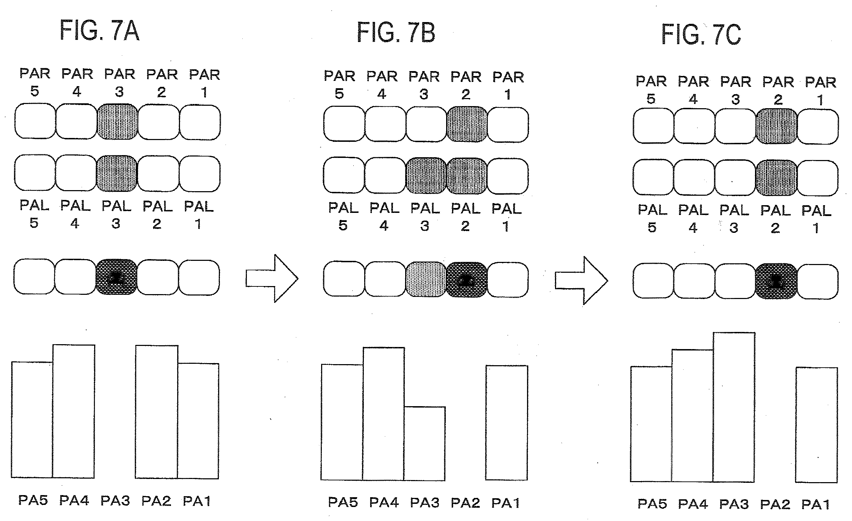

As shown in Figs. 7A to 7C, the time difference in turning off the light emitting devices may be zero. That is, in the case where a specific subregion becomes the non-irradiation region, left and right light emitting devices corresponding to the specific subregion may be simultaneously turned off.

As shown in Figs. 7A and 7B, if the preceding vehicle moves from the subregion PA3 to the subregion PA2, the second right light emitting device 52R2 and the second left light emitting device 52L2, which correspond to the subregion PA2 of the movement destination, are simultaneously turned off. As a result, the state where the glare is suppressed is quickly secured in the subregion PA2.

As shown in Figs. 7B and 7C, in the subregion PA3 which is changed from the non-irradiation region to the irradiation region, the third right light emitting device 52R3 corresponding to the right subregion PAR3 is first turned on, and then the third left light emitting device 52L3 corresponding to the left subregion PAL3 is turned on with a predetermined time difference, in the same manner as in the example shown in Figs. 6A to 6C.

Thereby, the subregion PA3 transitions to the irradiation state via a state where an illumination intensity has an intermediate value between the non-irradiation state and the irradiation state. Therefore, it seems to the driver that the non-irradiation region or the irradiation region moves smoothly in the light distribution pattern PA, thereby solving the trouble.

Also, in order to gradually change the illumination intensity of the specific subregion as described above, there has been known a control method of gradually increasing or decreasing a current level flowing into the light emitting device corresponding to the subregion. With the dimming control according to the embodiment, the same effect as that of such a control method can be achieved by the simple control of turning on/off the respective light emitting devices.

Meanwhile, the dimming control can be enabled or disabled by driver's manipulation. Also, based on information about the position of the vehicle acquired by the navigation system 19, the integrated controller 14 may determine as to whether or not the dimming control is necessary, and automatically enable or disable the dimming control.

The headlamp control system 11 of this embodiment can perform an electronic swivel control operation to irradiate a steering destination by moving the light distribution pattern of the headlamp in a left or right direction in accordance with the changed steering angle of the vehicle 10.

More specifically, based on the signals input from the wheel speed sensor 16 and the steering angle sensor 17, the integrated controller 14 controls the headlamp controller 20 to change the distribution of the additional light distribution pattern PA by increasing or decreasing a value of a current flowing into the respective light emitting devices of the right lamp unit 38R and the second left lamp unit 38L. Thereby, the additional light distribution pattern PA is horizontally moved in the left and right direction, thereby obtaining the same effect as that of the case where a lamp optical axis of each lamp unit is mechanically shifted.

In the above-described dimming control in which the subregion corresponding to the preceding vehicle moving in the additional light distribution pattern PA is set to the non-irradiation region, the non-irradiation region is moved based on the data acquired from the camera 18 and/or the front sensor (not shown). For this reason, unless new data is acquired and the information about the position of the preceding vehicle is updated, the non-irradiation region is not moved.

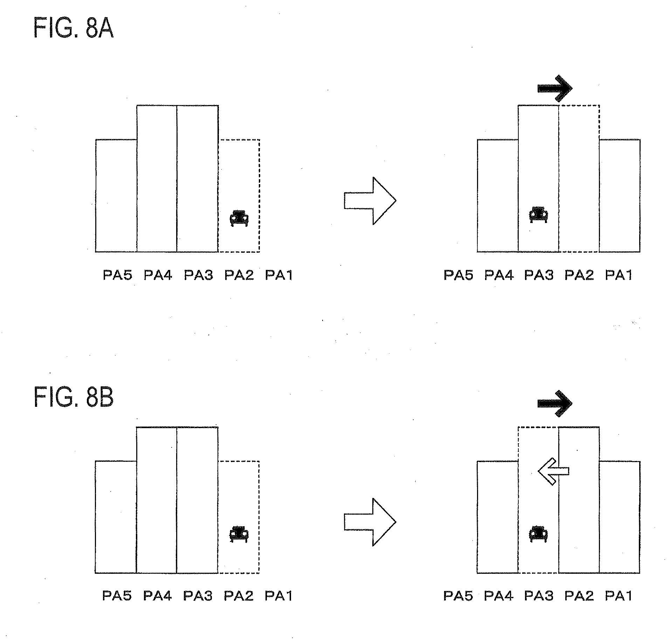

In Fig. 8A showing a comparative example to explain this matter, the subregion PA2 is set to the non-irradiation region to suppress the glare for the preceding vehicle, which is located in the subregion PA2. The bar graphs in the drawings indicate the illumination intensity of each of the subregions PA1 to PA5. If the vehicle is moved to right in this state, there may be a case where the whole light distribution pattern is moved in the right direction by the electronic swivel control while the preceding vehicle moves from the subregion PA2 to the subregion PA3 due to the change of the relative position.

If the electronic swivel control and the non-irradiation region moving control are independently performed, such a situation can occur that the information about the position of the preceding vehicle is not updated prior to the swivel operation of the light distribution pattern and that the non-irradiation region is not moved from the subregion PA2. That is, the subregion PA2, which should be irradiated with the high luminous intensity, is left as the non-irradiation state, and the subregion PA3 in which the preceding vehicle is located and in which the glare should be suppressed is irradiated with the light.

Then, in this embodiment, in the case where the electronic swivel control is executed in the state of performing the dimming control in which a portion of the additional light distribution pattern PA is the non-irradiation region, the non-irradiation region is moved in conjunction with the movement of the additional light distribution pattern PA by the electronic swivel, without waiting for the data update from the camera 18 and/or the front sensor.

For example, in Fig. 8B, in order to suppress the glare for the preceding vehicle which is located in the subregion PA2, the second right light emitting device 52R2 and the second left light emitting device 52L2 are turned off, so that the subregion PA2 is set to the non-irradiation region. If the vehicle 10 is moved to right in this state by operating a steering wheel, the integrated controller 14 executes the electronic swivel control based on the signals from the wheel speed sensor 16 and the steering angle sensor 17, and enables the headlamp controller 20 to move the whole additional light distribution pattern PA in the right direction.

Simultaneously, the integrated controller 14 controls the headlamp controller 20 to execute the control of moving the non-irradiation region to the left subregion PA3. As a result, the subregion PA2 is irradiated with the appropriate luminous intensity, so that the glare for the preceding vehicle, which moves to the subregion PA3 due to the change of the relative position, can be suppressed.

More specifically, supposing that an angle defined by the axial axis of the projection lens 48 and a line connecting the center of the non-irradiation region and the rear focal point F of the projection lens 48 is α and that a swivel quantity of the additional light distribution pattern PA by the electronic swivel control is Δθ, the movement control is performed so that the center of the non-irradiation region is located at a position (α - Δθ).

Alternatively, a data table or a function f (α, β, Δθ) to which not only α and Δθ but also a parameter β relating to a vehicular speed and/or a displacement of the light source are added may be stored in the integrated controller 14 in advance. The moving quantity of the non-irradiation region may be determined based on the above information.

The above embodiment is provided to facilitate understanding of the invention, and is not intended to limit the invention. The invention may be varied or modified without departing from its spirit. Of course, the invention also covers equivalents thereof.

The number of the subregions included in the additional light distribution pattern PA is not limited to the above-described configuration. Any number of at least two may be selected in a horizontal direction (the direction of the line H-H in Fig. 5). Also, plural rows of subregions may be arranged in the vertical direction (the direction of the line V-V in Fig. 5).

The shape of the subregion included in the additional light distribution pattern PA is not limited to the above configuration. At least one of (i) the areas and (ii) the shapes of the respective subregions may be different from each other.

The relationship between the number of the subregions included in the additional light distribution pattern PA and the number of the light sources for emitting the light to the respective subregions PA1 to PA5 is not limited to the above configuration. That is, at least one of the subregions may be irradiated with the light from at least three light sources. In this case, the number of intermediate values that the illumination intensity can have between the irradiation state and non-irradiation state by turning on or off the three or more light sources with a time difference increases. Therefore, it is possible to achieve more fine change in illumination intensity. It seems to the driver that the non-irradiation region or the irradiation region moves more smoothly.

It is not necessary to respectively provide the right headlamp unit 22R the left headlamp unit 22L with at least two light sources which emit the light to a specific subregion. The positions of the at least two light sources in the vehicle 10 are arbitrary so long as the desired additional light distribution pattern PA is achieved and the specific subregion is irradiated with the light.

The first lamp unit 36 to obtain the light distribution pattern PA for low beam may include an LED array, like the second right lamp unit 38R and the second left lamp unit 38L. In this case, the light distribution pattern PA for the low beam may be divided into plural subregions, and at least one of the subregions may be selectively set to the irradiation region or the non-irradiation region.

In the case where a specific subregion is set to the irradiation region or the non-irradiation region, it is not necessary to first turn on or off the light emitting device provided in the second right lamp unit 38R, and then turn on or off the light emitting device provided in the second left lamp unit 38L with a predetermined time difference. The order of turning on or off may be reversed in the left and right sides, and the order may be changed in accordance with the traveling state of the vehicle.

The headlamp controllers 20 may be provided for the right headlamp unit 22R and the left headlamp unit 22L, respectively. For example, when a command for turning on the light emitting device is input to the headlamp controller 20 which is assigned to the right headlamp unit 22R, the turning-on control is immediately performed. When the same command is input to the headlamp controller 20 which is assigned to the left headlamp unit 22L, the turning-on control is performed with a predetermined time difference. As a result, it is possible to suppress a data quantity input from the integrated controller 14 to minimum.

Executing the dimming control and the electronic swivel control to selectively set a subregion in the additional light distribution pattern PA to the non-irradiation state is not limited to the case where the preceding vehicle is present in the subregion. When a pedestrian is detected by the camera 18 and/or the front sensor and the same dimming control and the electronic swivel control are executed, the glare for the pedestrian can be suppressed.

Assuming that the camera 18 detects a pedestrian or the like in a range where the additional light distribution pattern PA can be formed when the second right lamp unit 38R and the second left lamp unit 38L are turned off, and that a portion of the light emitting devices is turned on to spot-irradiate the pedestrian or the like. Even in this case, the dimming control and the electronic swivel control can be applied.

The following numbered paragraphs describe further embodiments of the present invention:
1. A vehicle headlamp comprising:
   a plurality of light sources (52R1 to 52R5, 52L1 to 52L5) for a headlamp, provided in a vehicle (10); and
   control means (20) for controlling irradiation of light from the plurality of light sources (52R1 to 52R5, 52L1 to 52L5) to form a light distribution pattern (PA), wherein
   the control means (20) executes such control that a predetermined irradiation region (PA2) is moved in the light distribution pattern (PA), and
   the control means (20) causes two or more of the light sources (52R1 to 52R5, 52L1 to 52L5), which are turned on with a first time difference, to irradiate the irradiation region after the movement (PA3).
2. The vehicle headlamp according to claim 1, wherein the control means (20) turns off two or more of the light sources (52R1 to 52R5, 52L1 to 52L5), which irradiate the irradiation region before the movement (PA2), with a second time difference.
3. The vehicle headlamp according to claim 2, wherein the second time difference is shorter than the first time difference.
4. The vehicle headlamp according to any one of claims 1 to 3, wherein
   the plurality of light sources (52R1 to 52R5, 52L1 to 52L5) includes
      a first light source group (52R1 to 52R5) provided in a right headlamp (22R) which is disposed on a right side of the vehicle (10), and
      a second light source group (52L1 to 52L5) provided in a left headlamp (22L) which is disposed on a left side of the vehicle (10), and
   the two or more of the light sources (52R1 to 52R5, 52L1 to 52L5) irradiating the irradiation region after the movement includes
      at least one of the light sources (52R1 to 52R5) of the first light source group (52R1 to 52R5), and
      at least one of the light sources (52L1 to 52L5) of the second light source group (52L1 to 52L5).
5. The vehicle headlamp according to any one of claims 1 to 4, wherein the plurality of light sources (52R1 to 52R5, 52L1 to 52L5) are light sources for a high beam.

## Claims

1. A vehicle headlamp system mounted on a vehicle (10), comprising:
a first light sources group (52R1 to 52R5);
a second light sources group (52L1 to 52L2); and
a controller (20) that is configured to control irradiation of light from the first light sources group (52R1 to 52R5) to form a first light distribution pattern in front of the vehicle by causing each of a plurality of first subregions to be an irradiation region or a non-irradiation region, and that is configured to control irradiation of light from the second light sources group (52L1 to 52L2) to form a second light distribution pattern in front of the vehicle by causing each of a plurality of second subregions to be the irradiation region or the non-irradiation region, the number of the plurality of first subregions being the same as the number of the plurality of second subregions, wherein
a combined light distribution pattern that has a plurality of subregions is formed in front of the vehicle by combining the first light distribution pattern and the second light distribution pattern, the number of the plurality of subregions are the same as the number of the plurality of first subregions, and
when one of the plurality of subregions is changed from the non-irradiation region to the irradiation region, the controller is configured to turn on one or more light sources of the first light sources group (52R1 to 52R5) and one or more light sources of the second light sources group (52L1 to 52 L5) with a first time difference, the one or more light sources of the first light sources group (52R1 to 52R5) and the one or more light sources of the second light sources group (52L1 to 52L5) corresponding to the one of the plurality of subregions.

2. The vehicle headlamp system according to claim 1, wherein
when one of the plurality of subregions is changed from the irradiation region to the non-irradiation region, the controller is configured to turn on one or more light sources of the first light sources group (52R1 to 52R5) and one or more light sources of the second light sources group (52L1 to 52L5) with a second time difference, the one or more light sources of the first light sources group (52R1 to 52R5) and the one or more light sources of the second light sources group (52L1 to 52L5) corresponding to the one of the plurality of subregions.

3. The vehicle headlamp system according to claim 2, wherein
the second time difference is shorter than the first time difference.

4. The vehicle headlamp system according to any one of claims 1 to 3, wherein
the first light sources group (52R1 to 52R5) is disposed on a right side of the vehicle, and the second light sources group (52L1 to 52L5) is disposed on a left side of the vehicle.

5. The vehicle headlamp system according to any one of claims 1 to 4, wherein
the first light sources group (52R1 to 52R5) and the second light sources group (52L1 to 52L5) are light sources for a high beam.

6. A vehicle headlamp apparatus mounted on a vehicle, comprising:
a first light sources group (52R1 to 52R5) capable of emitting light for forming a first light distribution pattern in front of the vehicle by causing each of a plurality of first subregions to be an irradiation region or a non-irradiation region; and
a second light sources group (52L1 to 52L5) capable of emitting light for forming a second light distribution pattern in front of the vehicle by causing each of a plurality of second subregions to be the irradiation region or the non-irradiation region, the number of the plurality of first subregions being the same as the number of the plurality of second subregions, wherein
a combined light distribution pattern that has a plurality of subregions is formed in front of the vehicle by combining the first light distribution pattern and the second light distribution pattern, the number of the plurality of subregions are the same as the number of the plurality of first subregions, and
when one of the plurality of subregions is changed from the non-irradiation region to the irradiation region, one or more light sources of the first light sources group (52R1 to 52R5) and one or more light sources of the second light sources group (52L1 to 52L5) are turned on with a first time difference, the one or more light sources of the first light sources group (52R1 to 52R5) and the one or more light sources of the second light sources group (52L1 to 52L5) corresponding to the one of the plurality of subregions.
